# EUROPEAN PATENT SPECIFICATION

(11) **EP 3 089 539 B1**
(45) Date of publication and mention of the grant of the patent: **22.05.2019**
(21) Application number: 15170463.2
(22) Date of filing: 03.06.2015
(51) Int. Cl.: H04W 28/02, H04W 28/18, H04L 12/851

(54) **METHOD OF SETTING A COMMUNICATION PRIORITY OF A DATA COMMUNICATION**
VERFAHREN ZUR EINSTELLUNG EINER KOMMUNIKATIONSPRIORITÄT EINER DATENÜBERTRAGUNG
PROCÉDÉ DE RÉGLAGE D'UNE PRIORITÉ DE COMMUNICATION D'UNE COMMUNICATION DE DONNÉES

(30) Priority: 30.04.2015 EP 15165983
(43) Date of publication of application: 02.11.2016
(73) Proprietor: Vodafone GmbH, 40549 Düsseldorf (DE)
(72) Inventor: BINDRIM, Walter, 45721 Haltern am See (DE); FERNANDES, António Carlos Correia, 40489 Düsseldorf (DE)
(74) Representative: Patentanwälte Bals & Vogel

(56) References cited:
- EP-A1- 2 421 304
- EP-A2- 1 349 320
- WO-A1-2009/041878
- "3rd Generation Partnership Project; Technical Specification Group Services and System Aspects; Quality of Service (QoS) and policy aspects of 3GPP - Wireless Local Area Network (WLAN) interworking (Release 7)", 3GPP STANDARD; 3GPP TR 23.836, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 November 2005 (2005-11-01), pages 1-16, XP050363927,
- SEYONG PARK ET AL: "Collaborative QoS architecture between DiffServ and 802.11e wireless LAN", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 2, 22 April 2003 (2003-04-22), pages 945-949, XP010862562, DOI: 10.1109/VETECS.2003.1207765 ISBN: 978-0-7803-7757-8

## Description

The present invention is related to a method of setting a communication priority of a data communication as well as a computer program product being stored on a computer readable medium setting a communication priority of a data communication.

It is the common knowledge that data communication takes place between mobile entities and mobile networks. For example, a mobile entity can establish a data communication between itself and a Wi-Fi access point. Such Wi-Fi access point can forward the data communication to a mobile network or a local area network, a so-called LAN. Usually the data communication comprises two different data directions, in particular one uplink and one downlink direction. The data communication can comprise all different communication types. In particular, communication types, which are time sensitive, in particular real-time sensitive, are crucial as to the quality of service issues for the customer and user of the mobile entity. For example, if a customer uses a real-time sensitive communication type, in particular a voice-over-IP communication type, he recognizes a reduced quality of service immediately by reduced communication quality. All further real-time sensitive services, for example, video streaming, audio streaming, or the like, are also time sensitive and therefore crucial as to the recognition of the lack of quality of service of the customer.

The known solutions offer the possibility to set a communication priority in the downlink direction due to the fact that coming from the internet the type of the communication is known to the mobile network. Based on that knowledge, the communication network can set the communication priority high for real-time sensitive communication types and respectively low for non-sensitive communication types.

In the other direction, namely data communication resulting from the mobile entity, the mobile entity lacks such knowledge. Therefore, at least the first mile starting from the mobile entity, the data communication is sent from the mobile entity by the best effort mode. Best effort mode is to be understood as a data communication with a priority not set in a specific way. The data communication coming from the mobile entity is sent based on the possible bandwidth between the mobile entity and the next communication knot, for example, a Wi-Fi access point.

WO 2009/041878 A1 discloses a method in a user equipment to select a cell to be used among cells using a radio access technology being associated with a specific service class. EP 2 421 304 A1 discloses a method for selecting a network out of a plurality of networks. Thereby, a prioritized list of aggregator services is stored on a mobile device. 3GPP technical report - TR 23.836 V1.0.0 of November 2005 discloses a QoS architecture, providing a tunnel from an user equipment to a packet data gateway. Thereby, a user's QoS-profile is downloaded from a home location register (HLR) or home subscribe server (HSS). The article "Collaborative QoS Architecture between DiffServ and 802.11e Wireless LAN" of Park, Kim, Choi and Hong discloses data traffic prioritization on a mobile device. EP 1 349 320 A2 discloses a wireless terminal configured for determining priorities of data sets of different applications by means of a priority table.

Due to aforesaid situation, presently known methods can offer a specific communication priority to real-time sensitive communication types only in the downlink direction. The uplink direction is without knowledge about the communication type and therefore based on a best effort communication. This leads to lack of quality of service in some cases, which leads to a bad customer feedback in the situation of a reduced quality of service in real-time sensitive communication types.

It is an aspect of the present invention to solve at least partly aforesaid problems. In particular, it is an aspect of the present invention to offer a cheap and easy way to set a communication priority also in the uplink direction coming from a mobile entity for a respective data communication.

Aforesaid problems are solved by a method according to independent claim 1 as well as a computer program product according to independent claim 7. Further features and details of the invention result from the subclaims, the description and the figures. Features and details discussed with respect to the inventive method therefore are also correlated with the inventive computer program product and the other way around.

According to an inventive method, a communication priority is set for a data communication between a mobile entity and an evolved packet data gateway via a Wi-Fi connection to the internet. Such an inventive method comprises the following steps:
- Recognize a communication request at the mobile entity,
- determine a communication type of the communication request at the mobile entity,
- comparing the determined communication type to a priority list at the mobile entity,
- setting a communication priority for the data communication based on the comparison correlating with the determined communication type,
- regularly updating the priority list from a priority database in a mobile network.

According to the present invention, the method starts on the mobile entity. The mobile entity itself is able to recognize a communication request, which would start a data communication coming from the mobile entity and being sent to an evolved packet data gateway via a Wi-Fi connection to the internet. Starting from that recognition, the mobile entity itself can carry out a determination step as to the communication type of the communication request. As soon as the mobile entity has carried out that determination step, it notes the communication types so that communication type can now be compared to a priority list at the mobile entity. According to that comparison step, the communication priority can be set based on the correlation between the communication type and a correlated communication priority of the priority list.

According to the present invention, the information about a correlation between a communication type and the respective communication priority is based and stored within the mobile entity. Therefore, also in the uplink direction the information of the communication priority in a specific correlation to the respective communication type is available at the first mile of the uplink direction for the data communication. This leads to the possibility to offer a communication priority also for the first mile and therefore, for the full way of the data communication in the uplink direction starting from the mobile entity. In other words, also real-time sensitive communication types, for example, voice-over-IP data communication, audio, or video streaming, can now be set with a high communication priority so that high quality of service standards and respective parameters can be achieved for the data communication for such real-time sensitive communication types.

In contrast to the commonly known method this information is now available at the mobile entity. With respect to the inventive method, it is in a first step of no matter whether that information comes from and, in particular, this information is already stored on the mobile entity or if the mobile entity requests the respective information of the priority list from a database within the network. Both is possible.

Based on aforesaid description, the inventive method leads to a better quality of service and therefore to a better feedback of the customer, in particular as to real-time sensitive communication types. Moreover, due to the fact that also low communication priorities can be given to non-real-time sensitive communication types, the traffic between the mobile entity, respectively multiple mobile entities and the respective mobile network can be managed in an optimized way. The optimization leads to a better quality of service appearance for more or, in particular, all of the customers with all of their mobile entities.

In other words, the possible bandwidth between the mobile entity and the Wi-Fi access point can be used in an optimized way as to the real-time sensitive communication types of a data communication, as well as non-real-time sensitive data communication.

A communication priority according to the present invention can be, for example, a so-called DSCP profile. The DSCP profile can later on be matched with a respective QCI profile for a different kind of connection in the further line of the data communication. In particular, the inventive method comprises a data communication starting from a mobile entity and going over a Wi-Fi connection to a Wi-Fi access point. This Wi-Fi access point passes the data communication further on to an access gateway (e.g.: evolved packet data gateway - ePDG, trusted wireless Ian access gateway - TWAG, etc.). From the access gateway the data communication can enter the mobile network, in particular at a packet data network gateway (e.g.: packet gateway - PGW, GGSN, etc.) of the mobile network, exchanging all communications via standard GTP protocol. In the end, the data communication reaches the internet for respective data exchange with some servers on the internet site.

Data communication type can comprise, for example, one or also several specific types of the communication. In particular, the different communication types are prioritized by their real-time sensitivity.

According to a further aspect of the present invention, the method is characterized in that the communication type is determined out of at least one of the following types:
- service type
- customer type
- SSID type
- volume type
- contract type
- roaming type

Aforesaid list is of course non-exclusive. A service type can be, for example, a specification between different real-time sensitive types of communication. A service type can be, for example, a voice-over-IP type, an audio streaming type, a video streaming type, or the like. Customer types, for example, can be specified according to the level of the respective customer. For example, gold customers, silver customers or regular customers can be specified by different communication types. The specification can also be carried out as to the respective SSID type, namely the use of different Wi-Fi access points. For example, a mobile network operator can specify that his own Wi-Fi access points can be rated in a higher way with respect to Wi-Fi access points of other operators. Of course, also a volume type can be used for the data communication type. For example, if a customer has reached his maximum volume of data communication during one month, the volume type can be used to reduce the communication priority of such data communication. With respect to already known limitations within the mobile network, this leads already to a reduction of the use of bandwidth in the first mile and namely between the mobile entity and the Wi-Fi access point. This leads to a further reduction of traffic with respect to already known possible limitations later on within the mobile network. Also, a contract type can be used to specify different communication types and to set different priority levels. Last but not least, also a roaming type can be used, which, for example, can be correlated with the contract type and/or the customer type for said different priority levels and communication priorities for different communication requests.

It is also possible, that according to the present invention the method is characterized in that the priority list is updated regularly from a priority database in a mobile network. As already discussed, it is crucial that the information about the communication priority is available at the mobile entity itself. This information can be placed in the mobile entity from the very beginning on, for example, by offering a respective SIM or any alternative solution (e.g.: virtual SIM, certificate, entitlement, etc.) to the customer, which is stored and located within the mobile entity. Due to the fact that some of the communication types and/or respective correlated communication priorities can change over time, an update possibility for dynamic amendments to the priority list is of high advantage. Such an update source can be formed by the priority database of this aspect of the invention. The priority database is within reach of the mobile network and therefore, possible to be updated in a central manner by the network operator. Based on the updated priority database the priority lists of all of the respective mobile entities can be updated in a dynamic manner. The regularly update process, for example, can be triggered on a time-based value. For example, every 24 hours an update process can be carried out. Also, the possibility of a location activated update process is possible. Last but not least, also an update is possible due to every new connection between the mobile entity and a new Wi-Fi access point. Of course, also other triggers are possible to start a respective update process.

It is also possible according the present invention that the method is characterized in that the priority database is connected to a packet gateway of the mobile network to communicate with the mobile entity via the access gateway (as discussed above). This is to be understood that the priority database is specifically located within the mobile network and therefore, easy to be amended by the network operator. A connection between the packet gateway and the priority database further leads to the possibility to have a short way between the priority database and the mobile entity for the update process due to the fact that the packet data gateway is in particular the interface of the mobile network to the Wi-Fi access point outside of the mobile network.

It is further of advantage that according to the present invention the method is characterized in that the data communication between the mobile entity and the internet is sent from the mobile entity via a Wi-Fi access point to the access gateway via a communication link. Due to the fact that in particular the first mile of communication between the mobile entity and the mobile network is usually a public connection, the security is of high interest. To ensure a high security level for the first mile of communication starting from the mobile entity, a respective secure tunnel can be established between the mobile entity and the Wi-Fi access point and further on from the Wi-Fi access point to the access gateway. The type of that secure tunnel is according to the present invention up to the specific needs of the specific situations. For example, a virtual private network tunnel (VPN) can be established between the mobile entity and the evolved packet data gateway. This leads also to the fact that in particular for different backhaul communications between the Wi-Fi access point and the evolved packet data gateway, the security can be increased significantly. For example, also mobile backhaul systems for the Wi-Fi access point, for example, LTE connections or 3G connections, can be used.

Based on the present invention, the method can further be characterized in that the Wi-Fi access point comprises a backhauling to the access gateway of at least one of the following types:
- LAN
- DSL
- Wi-Fi
- LTE
- 3G

Aforesaid list is non-exclusive. In particular, it has to be recognized that the backhauling for the Wi-Fi access point can be line-based on a fixed line or on a mobile basis. In particular, the inventive method is independently from the use of the respective backhaul system. Also, a combination of different backhaul systems is possible according to the present invention.

A further possibility according to the present invention is that the method is characterized in that the communication priority is selected on the real-time sensitivity of the selected communication type. Besides the way that the priority list can comprise specific communication types with correlated specific communication priorities, the priority list can also comprise the real-time sensitivity information of different communication types. Based on the real-time sensitivity, this is an intermediate information, which can be used to correlate the specific communication type to a communication priority by combining the information of the real-time sensitivity and therefore the quality of service parameters of the respective communication type.

A further aspect of the present invention is a computer program product being stored on a computer readable medium, setting a communication priority of a data communication between a mobile entity and an access gateway via a Wi-Fi connection to the internet, comprising the following:
- Computer readable program means, initiating the computer to recognize a communication request of the mobile entity,
- computer readable program means, initiating the computer to determine a communication type of the communication request at the mobile entity,
- computer readable program means, initiating the computer to compare the determined communication type to a priority list at the mobile entity,
- computer readable program means, initiating the computer to set a communication priority for the data communication base on the comparison correlating with the determined communication type,
- computer readable program means initiating the computer to regularly update the priority list from a priority database in a mobile network.

The inventive computer program product is in particular characterized in that the computer readable program means, initiating the computer to carry out a method according to the present invention. Therefore, the inventive computer program product brings up the same advantages, which have been discussed in detail with respect to the inventive method.

The accompanying figures show in an abstract manner:
- Fig. 1: a first possibility of an inventive method,
- Fig. 2: a second possibility of an inventive method and
- Fig. 3: a third possibility of an inventive method.

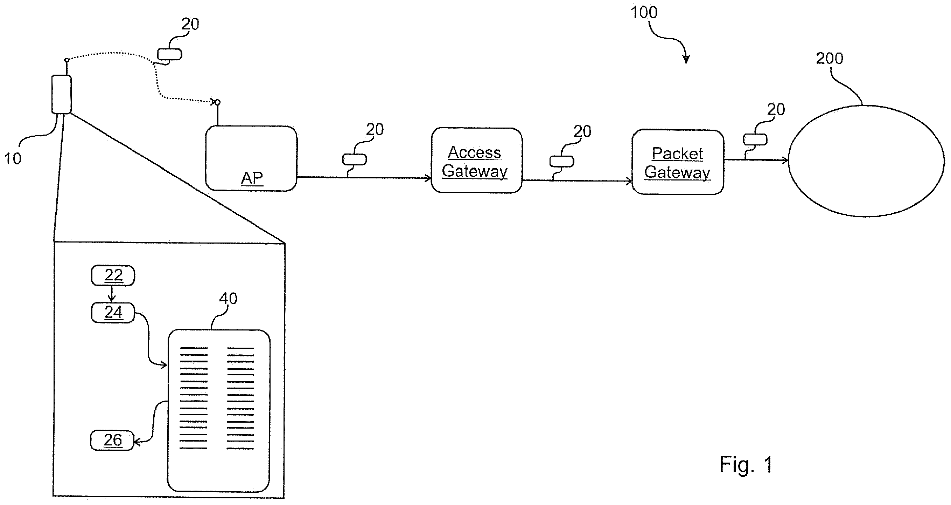

According to fig. 1, it is to be discussed that the present invention, for example, can be carried out as an application on the mobile entity 10. This application is run as a computer program product on the mobile entity 10 and comprises the recognition of a communication request 22 to start a data communication 20 coming from the mobile entity 10 to a Wi-Fi access point AP. Before the real data communication is starting to leave mobile entity 10, a comparison step takes places within the mobile entity 10. Namely, due to a recognition step the data communication 20 can be correlated with a communication type 24. The communication type 24 thus leads to the possibility to be compared to a priority list 40 within the mobile entity 10 and thereby leading to a communication priority 26. The further communication, in particular the further data communication 20, is now carried on based on the respective communication priority.

For example, if the priority list 40 gives the information that the communication request 22 is focused on a real-time sensitive data communication 20, for example, on video streaming type, a high communication priority 26 is given. The respective data communication 20 is therefore passed on to the Wi-Fi access point AP based on a high communication priority, therefore using high bandwidth during that communication. This high bandwidth is further used to the rest of the communication way of the data communication 20, namely by passing on the data communication 20 from the Wi-Fi access point AP to the access gateway and further on the packet gateway inside of the mobile network 100. At the last step, the data communication 22 reaches the internet 200, for example, the respective server.

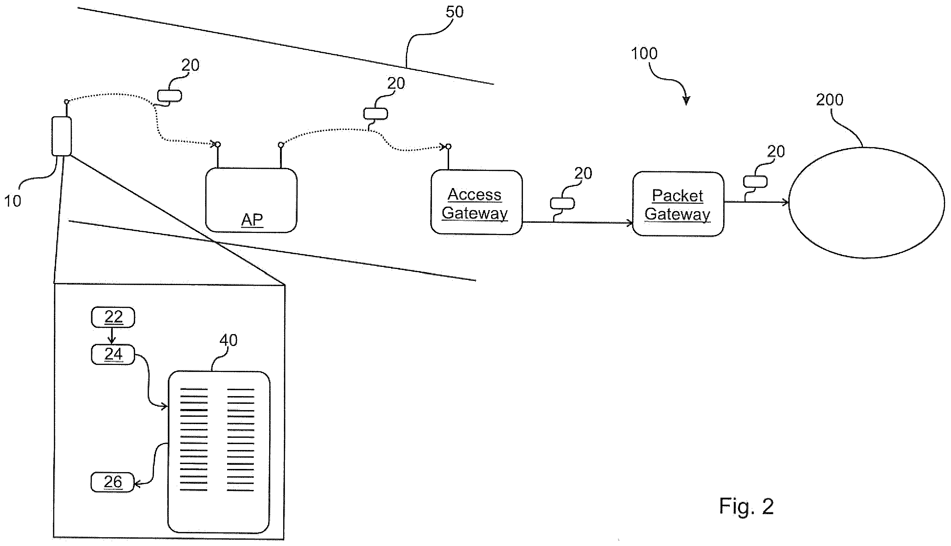

Based on the discussion of an inventive method according to fig. 1, fig. 2 shows a different step. In particular, fig. 2 follows the same line of communication as well as the respective inventive setting of a communication priority 26, which has been discussed in detail with respect to fig. 1. However, the backhauling between the Wi-Fi access point AP and the access gateway is in this case a Wi-Fi connection, whereas in fig. 1 it has been a fixed line connection. This leads to the situation that independently from the specific use of a backhauling system between the Wi-Fi access point AP and the access gateway the system according to the present invention can work. Optionally, to ensure high security of the data communication 20 in this case of fig. 2 a respective secure tunnel 50 is established between the mobile entity 10 and the access gateway.

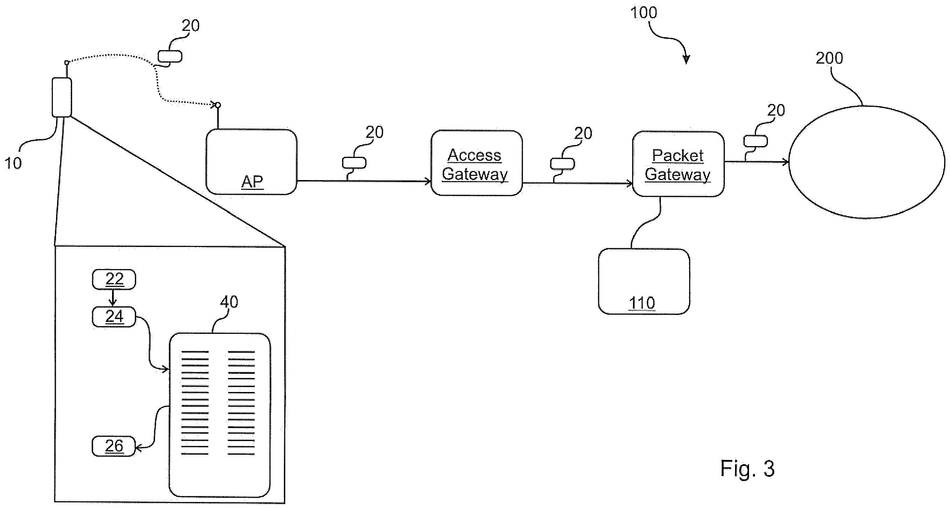

Fig. 3 shows the possibility of an easy and cost efficient update possibility to the priority list 40. In this case, a priority database 110 is part of the mobile network 100, namely by connecting the priority database 110 to the packet gateway. This is now possible to follow a downlink information line to update the priority list 40 with new data coming from the priority database 110. For all further data communication 20 now, an updated priority list 40 is the basis for carrying out the present inventive method. Such an updating process can be carried out on demand or actively triggered from the operator of the mobile network 100, for example, based on a time manner every 24 hours.

### REFERENCE SIGNS

- 10: mobile entity
- 20: data communication
- 22: communication request
- 24: communication type
- 26: communication priority
- 40: priority list
- 50: secure tunnel

- 100: mobile network
- 110: priority database

- 200: internet

- PGW: packet gateway
- GGSN: Gateway GPRS support node
- TWAG: Trusted wireless Ian gateway
- TWAN: Trusted wireless Ian access network
- ePDG: evolved packet data gateway
- AP: Wi-Fi access point
- SSID: service set identification

## Claims

1. Method of setting a communication priority (26) of a data communication (20) between a mobile entity (10) and an access gateway via a WiFi connection to the internet (200), comprising the following steps:
- Recognize a communication request (22) at the mobile entity (10),
- Determine a communication type (24) of the communication request (22) at the mobile entity (10),
- Comparing the determined communication type (24) to a priority list (40) at the mobile entity (10),
- Setting a communication priority (26) for the data communication (20) based on the comparison correlating with the determined communication type (24),
**characterized in that** the priority list is updated regularly from a priority database (110) in a mobile network (100).

2. Method according to claim 1, wherein the communication type (24) is determined out of at least one of the following types:
- Service type
- Customer type
- SSID type
- Volume type
- Contract type
- Roaming type

3. Method according to any of the preceding claims, wherein the priority database (110) is connected to a packet gateway of the mobile network (110) to communicate with the mobile entity (10) via the access gateway .

4. Method according to any of the preceding claims, wherein the data communication (20) between the mobile entity (10) and the internet (200) is send from the mobile entity (10) via a WiFi access point (AP) to the access gateway via a communication link with an optional secure tunnel (50).

5. Method according to claim 4, wherein the WiFi access point (AP) comprises a backhauling to the access gateway of at least one of the following types:
- LAN
- DSL
- WiFi
- LTE
- 3G

6. Method according to any of the preceding claims, wherein the communication priority (26) is selected on the real time sensitivity of the selected communication type (24).

7. Computer program product being stored on a computer readable medium setting a communication priority (26) of a data communication (20) between a mobile entity (10) and an access gateway via a WiFi connection to the internet (200), comprising the following:
- Computer readable program means, initiating the computer to recognize a communication request (22) at the mobile entity (10),
- Computer readable program means, initiating the computer to determine a communication type (24) of the communication request (22) at the mobile entity (10),
- Computer readable program means, initiating the computer to compare the determined communication type (24) to a priority list (40) at the mobile entity (10),
- Computer readable program means, initiating the computer to set a communication priority (26) for the data communication (20) based on the comparison correlating with the determined communication type (24),
**characterized in** computer readable program means, initiating the computer to carry out a method with the features of claims 1 to 6.

## Patentansprüche

1. Verfahren zur Einstellung einer Kommunikationspriorität (26) einer Datenkommunikation (20) zwischen einer Mobileinheit (10) und einem Access Gateway über eine WiFi-Verbindung mit dem Internet (200), umfassend die folgenden Schritte:
- Erkennen einer Kommunikationsanfrage (22) an der Mobileinheit (10),
- Bestimmen einer Kommunikationsart (24) der Kommunikationsanfrage (22) an der Mobileinheit (10),
- Vergleichen der bestimmten Kommunikationsart (24) mit einer Prioritätsliste (40) an der Mobileinheit (10),
- Einstellen einer Kommunikationspriorität (26) für die Datenkommunikation (20) auf Grundlage des Vergleichs in Korrelation mit der bestimmten Kommunikationsart (24),
**dadurch gekennzeichnet, dass** die Prioritätsliste regelmäßig von einer Prioritätsdatenbank (110) in einem Mobilnetz (100) aktualisiert wird.

2. Verfahren nach Anspruch 1, wobei die Kommunikationsart (24) aus zumindest einer der folgenden Arten bestimmt wird:
- Dienstart
- Kundenart
- SSID-Typ
- Volumenart
- Vertragsart
- Roaming-Art.

3. Verfahren nach einem der vorstehenden Ansprüche, wobei die Prioritätsdatenbank (110) mit einem Paket-Gateway des Mobilnetzes (110) verbunden ist, um über das Access Gateway mit der Mobileinheit (10) zu kommunizieren.

4. Verfahren nach einem der vorstehenden Ansprüche, wobei die Datenkommunikation (20) zwischen der Mobileinheit (10) und dem Internet (200) von der Mobileinheit (10) über einen WiFi Zugangspunkt (AP) an das Access Gateway über eine Kommunikationsverbindung mit einem optionalen sicheren Tunnel (50) gesendet wird.

5. Verfahren nach Anspruch 4, wobei der WiFi Zugangspunkt (AP) einen Backhaul an das Access Gateway von zumindest einer der folgenden Arten aufweist:
- LAN
- DSL
- WiFi
- LTE
- 3G.

6. Verfahren nach einem der vorstehenden Ansprüche, wobei die Kommunikationspriorität (26) auf Grundlage der Echtzeitempfindlichkeit der ausgewählten Kommunikationsart (24) ausgewählt wird.

7. Computerprogrammprodukt, das auf einem computerlesbaren Medium gespeichert ist, und eine Kommunikationspriorität (26) einer Datenkommunikation (20) zwischen einer Mobileinheit (10) und einem Access Gateway über eine WiFi-Verbindung mit dem Internet (200) einstellt, aufweisend:
- computerlesbare Programmittel, die den Computer dazu veranlassen, eine Kommunikationsanfrage (22) an der Mobileinheit (10) zu erkennen,
- computerlesbare Programmittel, die den Computer dazu veranlassen, eine Kommunikationsart (24) der Kommunikationsanfrage (22) an der Mobileinheit (10) zu bestimmen,
- computerlesbare Programmittel, die den Computer veranlassen, die bestimmte Kommunikationsart (24) mit einer Prioritätsliste (40) an der Mobileinheit (10) zu vergleichen,
- computerlesbare Programmittel, die den Computer veranlassen, eine Kommunikationspriorität (26) für die Datenkommunikation (20) auf Grundlage des Vergleichs in Korrelation mit der bestimmten Kommunikationsart (24) einzustellen,
**gekennzeichnet durch** computerlesbare Programmittel, die den Computer veranlassen, ein Verfahren mit den Merkmalen der Ansprüche 1 bis 6 durchzuführen.

## Revendications

1. Procédé destiné à régler une priorité de communication (26) d'une communication de données (20) entre une entité mobile (10) et une passerelle d'accès via une connexion WiFi à l'Internet (200), comprenant les étapes suivantes :
- reconnaître une demande de communication (22) sur l'entité mobile (10) ;
- déterminer un type de communication (24) de la demande de communication (22) sur l'entité mobile (10) ;
- comparer le type de communication déterminé (24) à une liste de priorités (40) sur l'entité mobile (10) ;
- régler une priorité de communication (26) pour la communication de données (20) sur la base de la comparaison en corrélation avec le type de communication déterminé (24),
**caractérisé en ce que** la liste de priorités est mise à jour régulièrement à partir d'une base de données de priorités (110) dans un réseau mobile (100).

2. Procédé selon la revendication 1, dans lequel le type de communication (24) est déterminé parmi au moins un des types suivants :
- type de service ;
- type de client ;
- type SSID (Service Set Identifier, identifiant de réseau sans fil) ;
- type de volume ;
- type de contrat, et
- type d'itinérance.

3. Procédé selon l'une quelconque des revendications précédentes, dans lequel la base de données de priorités (110) est connectée à une passerelle par paquets du réseau mobile (110) afin de communiquer avec l'entité mobile (10) via la passerelle d'accès.

4. Procédé selon l'une quelconque des revendications précédentes, dans lequel la communication de données (20) entre l'entité mobile (10) et l'Internet (200) est envoyée de l'entité mobile (10), via un point d'accès WiFi (AP), à la passerelle d'accès via une liaison de communication avec un tunnel sécurisé optionnel (50).

5. Procédé selon la revendication 4, dans lequel le point d'accès WiFi (AP) comprend un raccordement à la passerelle d'accès d'au moins un des types suivants :
- LAN (Local Area Network, réseau local) ;
- DSL (Digital subscriber Line, Ligne d'abonné numérique);
- WiFi ;
- LTE (Long Term Evolution, Evolution à long terme) ;
- 3G.

6. Procédé selon l'une quelconque des revendications précédentes, dans lequel la priorité de communication (26) est sélectionnée sur la sensibilité en temps réel du type de communication sélectionné (24).

7. Produit formant programme informatique stocké sur un support lisible par ordinateur, réglant une priorité de communication (26) d'une communication de données (20) entre une entité mobile (10) et une passerelle d'accès via une connexion WiFi à l'Internet (200), comprenant les éléments suivants :
- des moyens formant programme lisible par ordinateur, initialisant l'ordinateur pour reconnaître une demande de communication (22) sur l'entité mobile (10) ;
- des moyens formant programme lisible par ordinateur, initialisant l'ordinateur pour déterminer un type de communication (24) de la demande de communication (22) sur l'entité mobile (10) ;
- des moyens formant programme lisible par ordinateur, initialisant l'ordinateur pour comparer le type de communication déterminé (24) à une liste de priorités (40) sur l'entité mobile (10) ;
- des moyens formant programme lisible par ordinateur, initialisant l'ordinateur pour régler une priorité de communication (26) pour la communication de données (20) sur la base de la comparaison en corrélation avec le type de communication déterminé (24),
**caractérisé par** des moyens formant programme lisible par ordinateur initialisant l'ordinateur pour mettre en oeuvre un procédé selon les caractéristiques des revendications 1 à 6.
